# EUROPÄISCHE PATENTSCHRIFT

(11) **EP 3 159 516 B1**
(45) Veröffentlichungstag und Bekanntmachung des Hinweises auf die Patenterteilung: **12.12.2018**
(21) Anmeldenummer: 16002228.1
(22) Anmeldetag: 18.10.2016
(51) Int. Cl.: F02D 41/00, F01N 3/20, F02D 13/02, F02D 41/14, F02B 37/013

(54) **VERFAHREN ZUM BETREIBEN EINER BRENNKRAFTMASCHINE, INSBESONDERE EINES DIESELMOTORS**
METHOD FOR OPERATING A COMBUSTION ENGINE, IN PARTICULAR A DIESEL ENGINE
PROCÉDÉ DE FONCTIONNEMENT D'UN MOTEUR À COMBUSTION INTERNE, EN PARTICULIER D'UN MOTEUR DIESEL

(30) Priorität: 22.10.2015 DE 102015013794
(43) Veröffentlichungstag der Anmeldung: 26.04.2017
(73) Patentinhaber: MAN Truck & Bus AG, 80995 München (DE)
(72) Erfinder: Weiß, Joachim, 90522 Oberasbach (DE); Malischewski, Thomas, 91560 Heilsbronn (DE)
(74) Vertreter: Liebl, Thomas

(56) Entgegenhaltungen:
- EP-A2- 2 083 157
- JP-B2- 3 719 611
- US-A1- 2006 123 788
- US-A1- 2012 227 397
- TIM LANCEFIELD ET AL: "The Application of Variable Event Valve Timing to a Modern Diesel Engine", SAE TECHNICAL PAPER SERIES, Bd. 1, 6. März 2000 (2000-03-06), XP055349514, US ISSN: 0148-7191, DOI: 10.4271/2000-01-1229

## Beschreibung

Die Erfindung betrifft ein Verfahren zum Betreiben einer Brennkraftmaschine, insbesondere eines Dieselmotors, nach dem Oberbegriff des Patentanspruches 1, eine Vorrichtung nach dem Oberbegriff des Patentanspruches 14 sowie ein Fahrzeug, insbesondere ein Nutzfahrzeug, zur Durchführung des Verfahrens und/oder mit der Vorrichtung.

Es ist bekannt, an einer Brennkraftmaschine eine externe Abgasrückführung vorzusehen, mittels der das von der Brennkraftmaschine emittierte Abgas wieder der Brennkraftmaschine zugeführt werden kann. Auf diese Weise können in dem Abgas der Brennkraftmaschine enthaltene Schadstoffe, insbesondere Stickoxide, verringert werden.

Des Weiteren ist es allgemein bekannt, dass zur Erhöhung des Brennkraftmaschinen-Wirkungsgrads und einer entsprechenden Senkung des Kraftstoffverbrauchs der Brennkraftmaschine die der Brennkraftmaschine zugeführte Verbrennungsluft mittels eines Verdichters eines Abgasturboladers verdichtet werden kann. Eine besonders effektive Erhöhung des Wirkungsgrads lässt sich dabei durch eine zweistufige Aufladung mit Zwischenkühlung realisieren. Die Verdichtung der Verbrennungsluft führt jedoch üblicherweise zu einer Erhöhung der Spitzentemperaturen im Verbrennungsprozess, wodurch sich auch die Menge der von der Brennkraftmaschine emittierten Stickoxide erhöht.

Zudem wird durch die Verdichtung der Verbrennungsluft bei hohen Drehmomenten bzw. bei hohen Mitteldrücken der Brennkraftmaschine eine externe Abgasrückführung aufgrund des hohen Drucks der durch den Ansaugtrakt strömenden Verbrennungsluft und eines gleichzeitig ansteigenden positiven Spülgefälles erschwert. Maßnahmen zur Steigerung der Rückführrate verringern die Effektivität der Prozessrückführung und führen wegen des erhöhten Kraftstoffverbrauchs zu einer weiteren Erhöhung der emittierten Stickoxide. Um die geltenden Abgasvorschriften dennoch einhalten zu können, könnte beispielsweise bei der Verwendung eines SCR-Katalysators die Menge einer stromauf des SCR-Katalysators in den Abgasstrang eingeleiteten wässrigen Harnstofflösung ("AdBlue") erhöht werden. Dies hat jedoch erhöhte Betriebskosten und, sofern die Brennkraftmaschine an einem Fahrzeug vorgesehen ist, eine Verringerung der Reichweite des Fahrzeugs zur Folge.

Patentdokument US 2006/123788 A1 offenbart ein Verfahren, wobei der Schließzeitpunkt des Einlassventils in Abhängigkeit von der Motorlast, respektive in Abhängigkeit von der Motordrehzahl, modifiziert wird.

Aufgabe der Erfindung ist es daher, ein Verfahren zum Betreiben einer Brennkraftmaschine, insbesondere eines Dieselmotors, sowie eine Vorrichtung bereitzustellen, mittels denen die Brennkraftmaschine mit einem hohen Wirkungsgrad betrieben und der Schadstoffausstoß der Brennkraftmaschine auf effektive Weise verringert werden kann.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zum Betreiben einer Brennkraftmaschine, insbesondere eines Dieselmotors, vorgeschlagen, wobei eine externe Abgasrückführungs-Einrichtung vorgesehen ist, mittels der das von der Brennkraftmaschine emittierte Abgas wieder der Brennkraftmaschine zugeführt werden kann, wobei die Abgasrückführungs-Einrichtung eine Rückführungs-Stelleinrichtung aufweist, mittels der die Menge des rückgeführten Abgases eingestellt werden kann, wobei eine Schließzeitpunkt-Stelleinrichtung vorgesehen ist, mittels der der Schließzeitpunkt des wenigstens einen Einlassventils der Brennkraftmaschine verstellt werden kann, wobei mittels der Schließzeitpunkt-Stelleinrichtung ein Grundzyklus der Brennkraftmaschine eingestellt werden kann, in dem das wenigstens eine Einlassventil der Brennkraftmaschine in einem Kurbelwinkelbereich von 1° bis 40° Kurbelwinkel, insbesondere 10° bis 40° Kurbelwinkel, nach UT (unterer Totpunkt) schließt. Erfindungsgemäß kann zur Reduzierung der von der Brennkraftmaschine emittierten Stickoxide ein Stickoxid-Reduzierungszyklus mittels der Schließzeitpunkt-Stelleinrichtung eingestellt werden, in dem das wenigstens eine Einlassventil der Brennkraftmaschine im Vergleich zum Grundzyklus früher oder später schließt, wobei ein Steuergerät vorgesehen ist, mittels dem die Schließzeitpunkt-Stelleinrichtung und die Rückführungs-Stelleinrichtung in Abhängigkeit von dem aktuellen Drehmoment der Brennkraftmaschine geregelt und/oder gesteuert werden, wobei, sofern das Drehmoment der Brennkraftmaschine wenigstens einen definierten Drehmoment-Grenzwert unterschreitet, die Brennkraftmaschine in dem Grundzyklus betrieben und die Rückführung des Abgases mittels der Rückführungs-Stelleinrichtung freigegeben wird, und wobei, sofern das Drehmoment der Brennkraftmaschine den definierten Drehmomente-Grenzwert überschreitet, die Brennkraftmaschine in dem Stickoxid-Reduzierungszyklus betrieben und die Rückführung des Abgases mittels der Rückführungs-Stelleinrichtung gesperrt wird.

Auf diese Weise können die von der Brennkraftmaschine emittierten Schadstoffe effektiv verringert werden, da bei höheren Drehmomenten bzw. bei höheren Mitteldrücken die Brennkraftmaschine nun in dem Stickoxid-Reduzierungszyklus betrieben und die Abgasrückführung gesperrt wird. Durch den Betrieb der Brennkraftmaschine in dem Stickoxid-Reduzierungszyklus wird die Spitzentemperatur im Verbrennungsprozess abgesenkt, so dass sich die Menge der in dem Verbrennungsprozess gebildeten Stickoxide verringert. Zudem wird in dem Stickoxid-Reduzierungszyklus auch ein hoher Brennkraftmaschinen-Wirkungsgrad erreicht. Die Rückführung des von der Brennkraftmaschine emittierten Abgases wird dabei gesperrt, da sich diese negativ auf den Stickoxid-Reduzierungszyklus auswirkt (u.a. durch ein verringertes Spülgefälle) und, wie bereits erwähnt, bei höheren Drehmomenten bzw. höheren Mitteldrücken der Brennkraftmaschine bezüglich der Prozessführung weniger wirksam ist. Bei geringeren Drehmomenten bzw. bei niedrigeren Mitteldrücken der Brennkraftmaschine wird die Brennkraftmaschine dann in dem Grundzyklus betrieben und die Rückführung des Abgases freigegeben. Bei dieser Betriebsweise der Brennkraftmaschine weist die Abgasrückführungs-Einrichtung eine hohe Effektivität bezüglich der Verringerung der emittierten Stickoxide auf. Zudem wird die Brennkraftmaschine in dem Grundzyklus mit einem besonders hohen Wirkungsgrad betrieben.

Das aktuelle Drehmoment der Brennkraftmaschine kann dabei beispielsweise mittels des Steuergeräts aus der eingespritzten Kraftstoffmenge ermittelt werden. Die eingespritzte Kraftstoffmenge ist dabei üblicherweise proportional zur Ansteuerdauer der Einspritzung.

In einer bevorzugten Verfahrensführung wird der Drehmoment-Grenzwert in Abhängigkeit von der aktuellen Drehzahl der Brennkraftmaschine mittels des Steuergeräts eingestellt bzw. verstellt. Die Drehzahl der Brennkraftmaschine hat einen Einfluss auf die Menge des mittels der externen Abgasrückführungs-Einrichtung rückführbaren Abgases. Bevorzugt ist dabei vorgesehen, dass der eingestellte Drehmoment-Grenzwert mit steigender Drehzahl der Brennkraftmaschine abnimmt.

Vorzugsweise liegt der Drehmoment-Grenzwert in einem Bereich von 20% bis 60% des maximalen Drehmoments der Brennkraftmaschine.

In einer bevorzugten konkreten Ausgestaltung ist in dem Steuergerät ein Kennfeld abgespeichert, in das der Drehmoment-Grenzwert in Abhängigkeit von der Drehzahl der Brennkraftmaschine eingetragen ist. Mittels eines derartigen Kennfelds kann der Drehmoment-Grenzwert auf einfache und zuverlässige Weise in Abhängigkeit von der Drehzahl der Brennkraftmaschine eingestellt werden.

Besonders bevorzugt ist ein Abgasstrang mit einem Abgasnachbehandlungssystem vorgesehen, wobei eine Temperatur-Erfassungseinrichtung vorgesehen ist, mittels der die Temperatur des durch den Abgasstrang strömenden Abgases, in Abgas-Strömungsrichtung gesehen, stromauf des Abgasnachbehandlungssystems erfasst werden kann, und wobei die Schließzeitpunkt-Stelleinrichtung und die Rückführungs-Stelleinrichtung zusätzlich zu dem Drehmoment auch in Abhängigkeit von der mittels der Temperatur-Erfassungseinrichtung erfassten Temperatur geregelt und/oder gesteuert werden. Auf diese Weise kann eine hohe Effektivität des Abgasnachbehandlungssystems sichergestellt werden. Die Erfassung der Abgastemperatur kann dabei beispielsweise mittels eines stromauf des Abgasnachbehandlungssystems angeordneten Temperatursensors erfolgen.

Des Weiteren ist die Begrifflichkeit "Abgasstrang" hier ausdrücklich in einem weiten Sinne zu verstehen. So umfasst der Abgasstrang hier alle abgasführenden Bereiche und Bauteile.

In einer bevorzugten Verfahrensführung wird, sofern die mittels der Temperatur-Erfassungseinrichtung erfasste Temperatur wenigstens einen Temperatur-Grenzwert überschreitet und das Drehmoment der Brennkraftmaschine den definierten Drehmoment-Grenzwert überschreitet, die Brennkraftmaschine in dem Grundzyklus betrieben und/oder die Rückführung des Abgases mittels der Rückführungs-Stelleinrichtung freigegeben. Sofern die mittels der Temperatur-Erfassungseinrichtung erfasste Temperatur den wenigstens einen definierten Temperatur-Grenzwert unterschreitet und das Drehmoment der Brennkraftmaschine den definierten Drehmoment-Grenzwert überschreitet, kann die Brennkraftmaschine dann in dem Stickoxid-Reduzierungszyklus betrieben und die Rückführung des Abgases mittels der Rückführungs-Stelleinrichtung gesperrt werden. Dadurch kann zuverlässig sichergestellt werden, dass das Abgasnachbehandlungssystem bei einem Betrieb der Brennkraftmaschine in dem Stickoxid-Reduzierungszyklus, nicht zu stark aufgeheizt wird.

Bevorzugt liegt der Temperatur-Grenzwert in einem Temperaturbereich von 450°C bis 500°C. Dadurch wird einer Schädigung eines SCR-Katalysators, der Vanadium als SCR-katalytisch aktives Material aufweist, effektiv entgegengewirkt. Bei der Verwendung anderer Materialien sind die Temperaturgrenzwerte entsprechend anzupassen.

Außerdem kann im Bereich sehr niedriger Drehmomente auf den Stickoxid-Reduzierungszyklus umgeschaltet werden, um die Abgastemperatur zur Verbesserung der Wirksamkeit des Abgasnachbehandlungssystems anzuheben. Dieser Effekt kommt durch die Drosselwirkung des Stickoxid-Reduzierungszyklus bei gleichzeitig niedrigen Verdichtungsdrücken im Schwachlastbereich zustande.

Weiter bevorzugt wird zur Abgasrückführung zumindest ein Teil des durch einen Abgasstrang strömenden Abgases, in Abgas-Strömungsrichtung gesehen, stromauf einer Turbine wenigstens einen Abgasturboladers der Brennkraftmaschine in eine Rückführungsleitung der externen Abgasrückführungs-Einrichtung eingeleitet. Weiter bevorzugt wird das mittels der externen Abgasrückführungs-Einrichtung rückgeführte Abgas, in Verbrennungsluft-Strömungsrichtung gesehen, stromab eines Verdichters wenigstens eines Abgasturboladers der Brennkraftmaschine in einen Ansaugtrakt der Brennkraftmaschine eingeleitet. Dadurch wird einer Versottung der luftführenden Anlageteile entgegengewirkt. Alternativ und/oder zusätzlich kann das mittels der externen Rückführungs-Einrichtung rückgeführte Abgas, in Verbrennungsluft-Strömungsrichtung gesehen, stromauf eines Verdichters wenigstens eines Abgasturboladers der Brennkraftmaschine in einen Ansaugtrakt der Brennkraftmaschine eingeleitet werden.

In einer weiteren bevorzugten Ausgestaltung ist ein Abgasstrang mit einem Abgasnachbehandlungssystem vorgesehen, wobei das Abgasnachbehandlungssystem wenigstens ein SCR-Katalysatorelement aufweist, mittels dem in dem Abgas der Brennkraftmaschine enthaltene Stickoxide mit Ammoniak als Reduktionsmittel reduziert werden können, wobei eine Zuführeinrichtung vorgesehen ist, mittels der das Ammoniak, insbesondere in Form einer wässrigen Harnstofflösung, stromauf des SCR-Katalysatorelements in den Abgasstrang eingeleitet wird. Mittels eines derartigen Systems können die in dem Abgas enthaltenen Stickoxide effektiv verringert werden. In dem Stickoxid-Reduzierungszyklus können die in dem Abgas enthaltenen Stickoxide dabei besonders effektiv mittels des SCR-Katalysatorelements reduziert werden, da hier üblicherweise höhere Abgastemperaturen vorherrschen. Dadurch wird die Umsetzung der in dem Abgas enthaltenen Stickoxide mit Hilfe des eingeleiteten Ammoniaks deutlich verbessert.

In einer bevorzugten Ausgestaltung ist der Stickoxid-Reduzierungszyklus durch einen Miller-Zyklus gebildet. Bevorzugt ist dabei vorgesehen, dass in dem Stickoxid-Reduzierungszyklus das wenigstens eine Einlassventil der Brennkraftmaschine in einem Kurbelwinkelbereich von 40° bis 5° Kurbelwinkel, insbesondere von 40° bis 1° Kurbelwinkel, vor UT schließt. Mit einem derartigen Kurbelwinkelbereich wird der Bildung von Stickoxiden im Verbrennungsprozess der Brennkraftmaschine zuverlässig entgegengewirkt und gleichzeitig ein hoher Wirkungsgrad der Brennkraftmaschine realisiert.

Alternativ und/oder zusätzlich kann der Stickoxid-Reduzierungszyklus auch durch einen Atkinson-Zyklus gebildet sein. Bevorzugt ist dabei vorgesehen, dass in dem Stickoxid-Reduzierungszyklus das wenigstens eine Einlassventil der Brennkraftmaschine in einem Kurbelwinkelbereich von 50° bis 90° Kurbelwinkel, insbesondere von 50° bis 70° Kurbelwinkel, nach UT schließt.

In einer konkreten Ausgestaltung kann die Schließzeitpunkt-Stelleinrichtung durch eine Nockenverstellung und/oder durch eine Nockenwellenverstellung gebildet sein. Auf diese Weise kann der Schließzeitpunkt des wenigstens einen Einlassventils der Brennkraftmaschine einfach und zuverlässig verstellt werden.

Vorzugsweise weist die Brennkraftmaschine mehrere, insbesondere zwei, Abgasturbolader zur Verdichtung der durch einen Ansaugtrakt der Brennkraftmaschine strömenden Verbrennungsluft auf, um eine hohe Verdichtung der durch den Ansaugtrakt strömenden Verbrennungsluft sicherzustellen. Bevorzugt ist dabei vorgesehen, dass, in Verbrennungsluft-Strömungsrichtung gesehen, zwischen einem Verdichter eines ersten Abgasturboladers und einem Verdichter eines zweiten Abgasturboladers sowie stromab des Verdichters des zweiten Abgasturboladers jeweils wenigstens eine Kühleinrichtung zur Kühlung der verdichteten Verbrennungsluft in oder an dem Ansaugtrakt angeordnet ist. Dadurch wird ein hoher Wirkungsgrad der Brennkraftmaschine sichergestellt.

Zur Lösung der bereits genannten Aufgabe wird ferner eine Vorrichtung beansprucht, mit einer Brennkraftmaschine, insbesondere mit einem Dieselmotor, und einer externen Abgasrückführungs-Einrichtung, wobei mittels der externen Abgasrückführungs-Einrichtung das von der Brennkraftmaschine emittierte Abgas wieder der Brennkraftmaschine zugeführt werden kann, wobei die Abgasrückführungs-Einrichtung eine Rückführungs-Stelleinrichtung aufweist, mittels der die Menge des rückgeführten Abgases eingestellt werden kann, wobei eine Schließzeitpunkt-Stelleinrichtung vorgesehen, mittels der der Schließzeitpunkt des wenigstens einen Einlassventils der Brennkraftmaschine verstellt werden kann, wobei mittels der Schließzeitpunkt-Stelleinrichtung ein Grundzyklus der Brennkraftmaschine eingestellt werden kann, in dem das wenigstens eine Einlassventil der Brennkraftmaschine in einem Kurbelwinkelbereich von 1° bis 40° Kurbelwinkel, insbesondere von 10° bis 40° Kurbelwinkel, nach UT (unterer Totpunkt) schließt. Erfindungsgemäß kann zur Reduzierung der von der Brennkraftmaschine emittierten Stickoxide ein Stickoxid-Reduzierungszyklus mittels der Schließzeit-Stelleinrichtung eingestellt werden, in dem das wenigstens eine Einlassventil der Brennkraftmaschine im Vergleich zum Grundzyklus früher oder später schließt, wobei ein Steuergerät vorgesehen ist, mittels dem die Schließzeitpunkt-Stelleinrichtung und die Rückführungs-Stelleinrichtung in Abhängigkeit von dem Drehmoment der Brennkraftmaschine geregelt und/oder gesteuert werden kann, wobei, sofern das Drehmoment der Brennkraftmaschine wenigstens einen definierten Drehmoment-Grenzwert unterschreitet, die Brennkraftmaschine in dem Grundzyklus betrieben und die Rückführung des Abgases mittels der Rückführungs-Stelleinrichtung freigegeben wird, und wobei, sofern das Drehmoment der Brennkraftmaschine den definierten Drehmoment-Grenzwert überschreitet, die Brennkraftmaschine in dem Stickoxid-Reduzierungszyklus betrieben und die Rückführung des Abgases mittels der Rückführungs-Stelleinrichtung gesperrt wird.

Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein Fahrzeug, insbesondere in Nutzfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den bereits gewürdigten Vorteilen des erfindungsgemäßen Verfahrens und werden hier ebenfalls nicht wiederholt. Alternativ zu einem Fahrzeug kann die erfindungsgemäße Vorrichtung natürlich aber auch stationär bzw. ortsfest angeordnet sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgen anhand von Zeichnungen lediglich beispielhaft näher erläutert.

Es zeigen:
- Fig. 1: in einer Seitenansicht einen Lastkraftwagen mit der erfindungsgemäßen Vorrichtung;
- Fig. 2: eine Darstellung, anhand der der Aufbau der Vorrichtung erläutert wird;
- Fig. 3: ein Diagramm, anhand dem das erfindungsgemäße Verfahren erläutert wird;
- Fig. 4: eine Darstellung, anhand der der Ablauf des erfindungsgemäßen Verfahrens erläutert wird; und
- Fig. 5: ein Diagramm, anhand dem das erfindungsgemäße Verfahren erläutert wird.

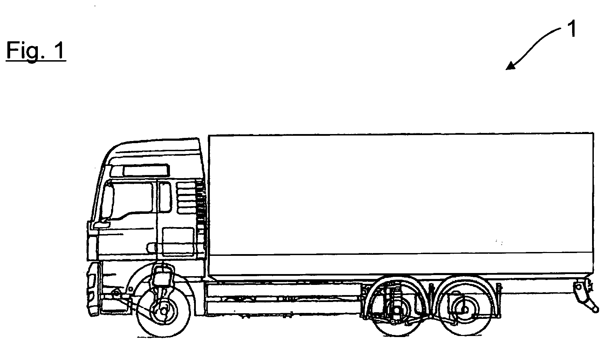

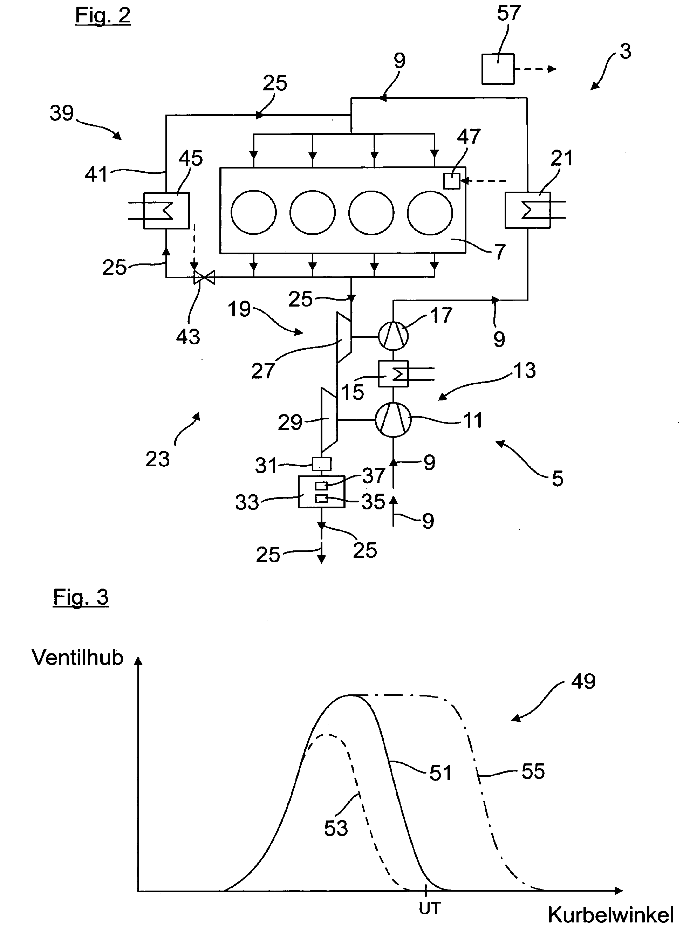

In Fig. 1 ist ein hier beispielhaft als Lastkraftwagen ausgebildetes Fahrzeug 1 mit einer erfindungsgemäßen Vorrichtung 3 (Fig. 2) gezeigt. Der Aufbau der Vorrichtung 3 wird nachfolgend anhand von Fig. 2 näher erläutert:

Wie aus Fig. 2 hervorgeht, weist die Vorrichtung 3 einen Ansaugtrakt 5 auf, mittels dem einer Brennkraftmaschine 7 der Vorrichtung 3 Verbrennungsluft 9 zugeführt werden kann. Der Ansaugtrakt 5 weist hier beispielhaft, in Abgas-Strömungsrichtung gesehen, einen Verdichter 11 eines ersten Abgasturboladers 13, einen wärmeabführenden Wärmeübertrager 15, einen Verdichter 17 eines zweiten Abgasturboladers 19 und einen weiteren wärmeabführenden Wärmeübertrager 21 auf.

Mittels des Verdichters 11 wird die in den Ansaugtrakt 5 einströmende Verbrennungsluft 9 verdichtet. Anschließend wird die mittels der Verdichters 11 verdichtete Verbrennungsluft mittels des wärmeabführenden Wärmeübertragers 15 gekühlt. Der wärmeabführende Wärmeübertrager 15 kann beispielsweise durch einen Ladeluftkühler gebildet sein. Schließlich wird die Verbrennungsluft mittels des Verdichters 17 noch weiter verdichtet und mittels des wärmeabführenden Wärmeübertragers 21 wieder abgekühlt. Der wärmeabführende Wärmeübertrager 21 kann ebenfalls durch einen Ladeluftkühler gebildet sein.

Gemäß Fig. 2 weist die Vorrichtung 3 weiter auch einen Abgasstrang 23 auf, durch den das von der Brennkraftmaschine 7 emittierte Abgas 25 geleitet wird. Der Abgasstrang 23 weist hier beispielhaft, in Abgas-Strömungsrichtung gesehen, eine Turbine 27 des zweiten Abgasturboladers 19, eine Turbine 29 des ersten Abgasturboladers 13, einen Temperatursensor 31 und ein lediglich schematisch angedeutetes Abgasnachbehandlungssystem 33 auf. Das Abgasnachbehandlungssystem 33 weist hier beispielhaft ein SCR-Katalysatorelement 35 auf, mittels dem in dem Abgas 9 der Brennkraftmaschine 7 enthaltende Stickoxide mit Ammoniak als Reduktionsmittel reduziert werden können. Zudem weist das Abgasnachbehandlungssystem 33 hier auch eine Zuführeinrichtung 37 auf, mittels der das Reduktionsmittel, hier beispielhaft in Form einer wässrigen Harnstofflösung, stromauf des SCR-Katalysatorelements 35 in den Abgasstrang 23 eingeleitet werden kann.

Des Weiteren weist der Abgasstrang 23 auch eine externe Abgasrückführung-Einrichtung 39 auf, mittels der das von der Brennkraftmaschine 7 emittierte Abgas 9 wieder der Brennkraftmaschine 7 zugeführt werden kann. Zur Abgasrückführung wird das von der Brennkraftmaschine 7 emittierte Abgas 25 hier beispielhaft, in Abgas-Strömungsrichtung gesehen, stromauf der Turbine 27 in eine Rückführungs-Leitung 41 der Abgas-Rückführungseinrichtung 39 eingeleitet, mittels der das Abgas 25, in Verbrennungsluft-Strömungsrichtung gesehen, stromab des wärmeabführenden Wärmeübertragers 21 in den Ansaugtrakt 5 eingeleitet werden kann. Die Abgasrückführungs-Einrichtung 39 weist weiter auch eine hier beispielhaft als Durchgangsventil 43 ausgebildete Rückführungs-Stelleinrichtung auf, mittels der die Menge des rückgeführten Abgases 25 eingestellt werden kann. Zudem weist die Abgasrückführungs-Einrichtung 39 hier beispielhaft auch einen wärmeabführenden Wärmeübertrager 45 auf, mittels dem das rückgeführte Abgas 25 gekühlt wird. Der wärmeabführende Wärmeübertrager 45 ist hier beispielhaft, in Abgas-Strömungsrichtung gesehen, stromab des Durchgangsventils 43 in der Rückführungs-Leitung 41 angeordnet.

Gemäß Fig. 2 weist die Vorrichtung 3 weiter auch eine Schließzeitpunkt-Stelleinrichtung 47 auf, mittels der der Schließzeitpunkt der Einlassventile der Brennkraftmaschine 7 verstellt werden kann. Die Schließzeitpunkt-Stelleinrichtung 47 ist hier beispielhaft durch eine Nockenwellen-Verstelleinrichtung gebildet. Mittels der Schließzeitpunkt-Stelleinrichtung 47 kann ein Grundzyklus der Brennkraftmaschine 7 eingestellt werden, in dem die Einlassventile der Brennkraftmaschine 7 in einem Kurbelwinkelbereich von 10° bis 40° Kurbelwinkel nach UT (unterer Totpunkt) geschlossen werden. Zudem kann mittels der Schließzeitpunkt-Stelleinrichtung 47 auch ein Stickoxid-Reduzierungszyklus eingestellt werden, in dem die Einlassventile der Brennkraftmaschine 7 im Vergleich zum Grundzyklus früher oder später geschlossen werden. Der Stickoxid-Reduzierungszyklus ist hier beispielhaft durch einen Miller-Zyklus gebildet. Vorzugsweise werden die Einlassventile der Brennkraftmaschine 7 dabei in dem Miller-Zyklus in einem Kurbelwinkelbereich von 40° bis 5° Kurbelwinkel vor UT geschlossen. Alternativ zu dem Miller-Zyklus könnte der Stickoxid-Reduzierungszyklus beispielsweise auch durch einen Atkinson-Zyklus gebildet sein.

In Fig. 3 ist ein Diagramm 49 gezeigt, dass die Unterschiede zwischen dem Grundzyklus, dem Miller-Zyklus und dem Atkinson-Zyklus verdeutlichen soll. In das Diagramm 49 ist eine erste Kurve 51 eingetragen, die einen beispielhaften Ventilhub der Einlassventile der Brennkraftmaschine 7 in Abhängigkeit vom Kurbelwinkel der Brennkraftmaschine 7 bei dem Grundzyklus zeigt. Zudem ist in das Diagramm 49 auch eine Kurve 53 eingetragen, die einen beispielhaften Ventilhub der Einlassventile in Abhängigkeit vom Kurbelwinkel der Brennkraftmaschine 7 bei einem Miller-Prozess zeigt. Zudem ist in das Diagramm 49 auch eine Kurve 55 eingetragen, die einen beispielhaften Ventilhub der Einlassventile in Abhängigkeit von dem Kurbelwinkel der Brennkraftmaschine 7 bei einem Atkinson-Zyklus zeigt.

Gemäß Fig. 2 weist die Vorrichtung 3 weiter auch ein Steuergerät 57 auf, mittels dem die Schließzeitpunkt-Stelleinrichtung 47 und das Durchgangsventil 43 hier in Abhängigkeit von dem aktuellen Drehmoment der Brennkraftmaschine 7 und der mittels des Temperatursensors 31 gemessenen Temperatur geregelt bzw. gesteuert werden. Diese Regelung bzw. Steuerung wird nachfolgend anhand von Fig. 6 näher erläutert:

Ausgehend von einem Ausgangszustand, in dem hier beispielhaft die Abgasrückführung mittels des Durchgangsventils 43 freigegeben ist und in der Grundzyklus der Brennkraftmaschine 7 eingestellt ist, wird mittels des Steuergeräts 57 zunächst in einem Schritt 58 überprüft, ob das aktuelle Drehmoment M bzw. der aktuelle Mitteldruck der Brennkraftmaschine 7 größer ist als ein definierter Drehmoment-Grenzwert M_{Grenz}. Sofern das aktuelle Drehmoment M der Brennkraftmaschine 7 nicht größer ist als der definierte Drehmoment-Grenzwert M_{Grenz}, wird die Abgasrückführung weiterhin freigegeben und der Grundzyklus bleibt eingestellt. Sofern das aktuelle Drehmoment M der Brennkraftmaschine 7 größer ist als der definierte Drehmoment-Grenzwert M_{Grenz}, wird in einem Schritt 59 überprüft, ob die mittels des Temperatursensors 31 gemessene Temperatur Tₘₑₛₛ größer als ein definierter Temperatur-Grenzwert T_{Grenz}. Sofern die gemessene Temperatur Tₘₑₛₛ größer ist als der Temperatur-Grenzwert T_{Grenz} wird hier beispielhaft die Rückführung des Abgases 9 weiterhin freigegeben und die Brennkraftmaschine weiterhin in dem Grundzyklus betrieben. Sofern die gemessene Temperatur Tₘₑₛₛ nicht größer als der Temperatur-Grenzwert ist, wird die Abgasrückführung mittels des Durchgangventils 43 gesperrt und der Miller-Zyklus eingestellt bzw. die Brennkraftmaschine 7 in dem Miller-Zyklus betrieben.

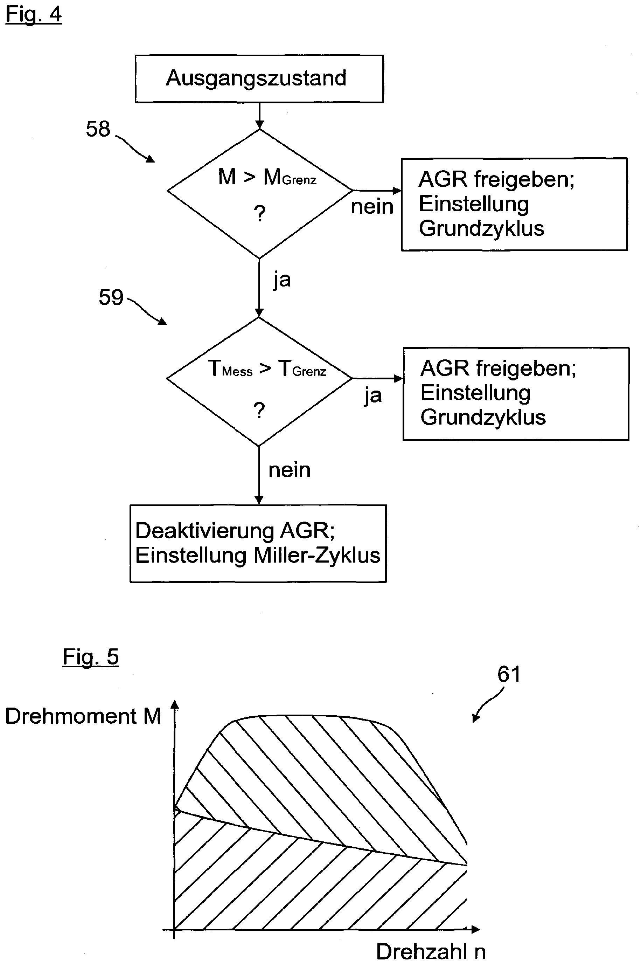

Des Weiteren wird der Drehmoment-Grenzwert M_{Grenz} hier beispielhaft in Abhängigkeit von der Drehzahl n der Brennkraftmaschine 7 mittels des Steuergeräts 57 verstellt bzw. geändert. Diese Verstellung erfolgt mittels eines in dem Steuergerät 57 abgespeicherten Kennfelds 61 (Fig. 5). Bevorzugt werden zudem zusätzlich zu dem aktuellen Drehmoment M der Brennkraftmaschine 5 und der mittels des Temperatursensors 31 gemessenen Temperatur Tₘₑₛₛ auch die Umgebungstemperatur und/oder der Umgebungsdruck bei der Regelung bzw. Steuerung der Schließzeitpunkt-Stelleinrichtung 47 und des Durchgangsventils 43 berücksichtigt.

### Bezugszeichenliste

- 1: Fahrzeug
- 3: Vorrichtung
- 5: Ansaugtrakt
- 7: Brennkraftmaschine
- 9: Verbrennungsluft
- 11: Verdichter
- 13: erster Abgasturbolader
- 15: wärmeabführender Wärmeübertrager
- 17: Verdichter
- 19: zweiter Abgasturbolader
- 21: wärmeabführender Wärmeübertrager
- 23: Abgasstrang
- 25: Abgas
- 27: Turbine
- 29: Turbine
- 31: Temperatursensor
- 33: Abgasnachbehandlungssystem
- 35: SCR-Katalysatorelement
- 37: Zuführeinrichtung
- 39: Abgasrückführungs-Einrichtung
- 41: Rückführungsleitung
- 43: Durchgangsventil
- 45: wärmeabführender Wärmeübertrager
- 47: Schließzeitpunkt-Stelleinrichtung
- 49: Diagramm
- 51: Kurve
- 53: Kurve
- 55: Kurve
- 57: Steuergerät
- 58: Schritt
- 59: Schritt
- 61: Kennfeld
- M: Drehmoment
- M_{Grenz}: Drehmoment-Grenzwert
- n: Drehzahl
- T_{Grenz}: Temperatur-Grenzwert
- T_{Mess}: Temperatur-Messwert

## Patentansprüche

1. Verfahren zum Betreiben einer Brennkraftmaschine, insbesondere eines Dieselmotors, wobei eine externe Abgasrückführungs-Einrichtung (39) vorgesehen ist, mittels der das von der Brennkraftmaschine (7) emittierte Abgas (25) wieder der Brennkraftmaschine (7) zuführbar ist, wobei die Abgasrückführungs-Einrichtung (39) eine Rückführungs-Stelleinrichtung (43) aufweist, mittels der die Menge des rückgeführten Abgases (25) einstellbar ist, wobei eine Schließzeitpunkt-Stelleinrichtung (47) vorgesehen ist, mittels der der Schließzeitpunkt des wenigstens einen Einlassventils der Brennkraftmaschine (7) verstellbar ist, wobei mittels der Schließzeitpunkt-Stelleinrichtung (47) ein Grundzyklus der Brennkraftmaschine (7) einstellbar ist, in dem das wenigstens eine Einlassventil der Brennkraftmaschine (7) in einem Kurbelwinkelbereich von 1° bis 40° Kurbelwinkel, insbesondere von 10° bis 40° Kurbelwinkel, nach UT (unterer Totpunkt) schließt, wobei zur Reduzierung der von der Brennkraftmaschine (7) emittierten Stickoxide ein Stickoxid-Reduzierungszyklus mittels der Schließzeitpunkt-Stelleinrichtung (47) einstellbar ist, in dem das wenigstens eine Einlassventil der Brennkraftmaschine (7) im Vergleich zum Grundzyklus früher oder später schließt, **dadurch gekennzeichnet, dass** ein Steuergerät (57) vorgesehen ist, mittels dem die Schließzeitpunkt-Stelleinrichtung (47) und die Rückführungs-Stelleinrichtung (43) in Abhängigkeit von dem Drehmoment der Brennkraftmaschine (7) geregelt und/oder gesteuert werden, wobei, sofern das Drehmoment (M) der Brennkraftmaschine (7) wenigstens einen definierten Drehmoment-Grenzwert (M_{Grenz}) unterschreitet, die Brennkraftmaschine (7) in dem Grundzyklus betrieben und die Rückführung des Abgases mittels der Rückführungs-Stelleinrichtung (43) freigegeben wird, und wobei, sofern das Drehmoment (M) der Brennkraftmaschine (7) den definierten Drehmoment-Grenzwert (M_{Grenz}) überschreitet, die Brennkraftmaschine (7) in dem Stickoxid-Reduzierungszyklus betrieben und die Rückführung des Abgases mittels der Rückführungs-Stelleinrichtung (43) gesperrt wird.

2. Verfahren nach Anspruch 1, **dadurch gekennzeichnet, dass** der Drehmoment-Grenzwert (M_{Grenz}) mittels des Steuergeräts (57) in Abhängigkeit von der Drehzahl (n) der Brennkraftmaschine (7) eingestellt und/oder verstellt wird, wobei bevorzugt vorgesehen ist, dass der eingestellte Drehmoment-Grenzwert (M_{Grenz}) mit steigender Drehzahl der Brennkraftmaschine (7) abnimmt.

3. Verfahren nach Anspruch 1 oder 2, **dadurch gekennzeichnet, dass** der Drehmoment-Grenzwert (M_{Grenz}) in einem Bereich von 10% bis 60% des maximalen Drehmoments der Brennkraftmaschine (7) liegt.

4. Verfahren nach Anspruch 2 oder 3, **dadurch gekennzeichnet, dass** in dem Steuergerät (57) ein Kennfeld (61) abgespeichert ist, in das der Drehmoment-Grenzwert (M_{Grenz}) in Abhängigkeit von der Drehzahl (n) der Brennkraftmaschine (7) eingetragen ist.

5. Verfahren nach einem der vorhergehenden Ansprüche, **dadurch gekennzeichnet, dass** ein Abgasstrang (23) mit einem Abgasnachbehandlungssystem (33) vorgesehen ist, wobei eine Temperatur-Erfassungseinrichtung (31) vorgesehen ist, mittels der die Temperatur (Tₘₑₛₛ) des durch den Abgasstrang (23) strömenden Abgases (25), in Abgas-Strömungsrichtung gesehen, stromauf des Abgasnachbehandlungssystems (33) erfassbar ist, und wobei die Schließzeitpunkt-Stelleinrichtung (47) und die Rückführungs-Stelleinrichtung (43) zusätzlich auch in Abhängigkeit von der mittels der Temperatur-Erfassungseinrichtung (31) erfassten Temperatur (Tₘₑₛₛ) geregelt und/oder gesteuert werden.

6. Verfahren nach Anspruch 5, **dadurch gekennzeichnet, dass**, sofern die mittels der Temperatur-Erfassungseinrichtung (31) erfasste Temperatur (Tₘₑₛₛ) wenigstens einen definierten Temperatur-Grenzwert (T_{Grenz}) überschreitet und das Drehmoment (M) der Brennkraftmaschine (7) den definierten Drehmoment-Grenzwert (M_{Grenz}) überschreitet, die Brennkraftmaschine (7) in dem Grundzyklus betrieben und die Rückführung des Abgases (25) mittels der Rückführungs-Stelleinrichtung (43) freigegeben wird, und wobei, sofern die mittels der Temperatur-Erfassungseinrichtung (31) erfasste Temperatur (Tₘₑₛₛ) den wenigstens einen definierten Temperatur-Grenzwert (T_{Grenz}) unterschreitet und das Drehmoment (M) der Brennkraftmaschine (7) den definierten Drehmoment-Grenzwert (M_{Grenz}) überschreitet, die Brennkraftmaschine (7) in dem Stickoxid-Reduzierungszyklus betrieben und die Rückführung des Abgases (25) mittels der Rückführungs-Stelleinrichtung (43) gesperrt wird.

7. Verfahren nach Anspruch 6, **dadurch gekennzeichnet, dass** der Temperatur-Grenzwert (T_{Grenz}) in einem Temperaturbereich von 450°C bis 500°C liegt.

8. Verfahren nach einem der vorhergehenden Ansprüche, **dadurch gekennzeichnet, dass** zur Abgasrückführung zumindest ein Teil des durch einen Abgasstrang (23) strömenden Abgases (25), in Abgas-Strömungsrichtung gesehen, stromauf einer Turbine (27, 29) wenigstens eines Abgasturboladers (13, 19) der Brennkraftmaschine (7) in eine Rückführungsleitung (41) der externen Abgasrückführungs-Einrichtung (39) eingeleitet wird, und/oder dass das mittels der externen Abgasrückführungs-Einrichtung (39) rückgeführte Abgas (25), in Verbrennungsluft-Strömungsrichtung gesehen, stromab eines Verdichters (11, 17) wenigstens eines Abgasturboladers (13, 19) der Brennkraftmaschine (7) in einen Ansaugtrakt (5) der Brennkraftmaschine (7) eingeleitet wird.

9. Verfahren nach einem der vorhergehenden Ansprüche, **dadurch gekennzeichnet, dass** ein Abgasstrang (23) mit einem Abgasnachbehandlungssystem (33) vorgesehen ist, wobei das Abgasnachbehandlungssystem (33) wenigstens ein SCR-Katalysatorelement (35) aufweist, mittels dem in dem Abgas der Brennkraftmaschine (7) enthaltene Stickoxide mit Ammoniak als Reduktionsmittel reduzierbar sind, wobei eine Zuführeinrichtung (37) vorgesehen ist, mittels der das Ammoniak, in Abgas-Strömungsrichtung gesehen, stromauf des SCR-Katalysatorelements (35) in den Abgasstrang (23) eingeleitet wird.

10. Verfahren nach einem der vorhergehenden Ansprüche, **dadurch gekennzeichnet, dass** der Stickoxid-Reduzierungszyklus durch einen Miller-Zyklus gebildet ist, wobei bevorzugt vorgesehen ist, dass in dem Stickoxid-Zyklus das wenigstens eine Einlassventil der Brennkraftmaschine (7) in einem Kurbelwinkelbereich von 40° bis 5° Kurbelwinkel vor UT schließt.

11. Verfahren nach einem der vorhergehenden Ansprüche, **dadurch gekennzeichnet, dass** der Stickoxid-Reduzierungszyklus durch einen Atkinson-Zyklus gebildet ist, wobei bevorzugt vorgesehen ist, dass in dem Stickoxid-Zyklus das wenigstens eine Einlassventil der Brennkraftmaschine (7) in einem Kurbelwinkelbereich von 50° bis 70° Kurbelwinkel nach UT schließt.

12. Verfahren nach einem der vorhergehenden Ansprüche, **dadurch gekennzeichnet, dass** Schließzeitpunkt-Stelleinrichtung (47) durch eine Nockenverstellung und/oder durch eine Nockenwellenverstellung gebildet ist.

13. Verfahren nach einem der vorhergehenden Ansprüche, **dadurch gekennzeichnet, dass** die Brennkraftmaschine (7) mehrere, insbesondere zwei, Abgasturbolader (13, 19) zur Verdichtung der durch einen Ansaugtrakt (5) der Brennkraftmaschine (7) strömenden Verbrennungsluft (9) aufweist, wobei bevorzugt vorgesehen ist, dass, in Verbrennungsluft-Strömungsrichtung gesehen, zwischen einem Verdichter (11) eines ersten Abgasturboladers (13) und einem Verdichter (17) eines zweiten Abgasturboladers (19) sowie stromab des Verdichters (17) des zweiten Abgasturboladers (19) jeweils wenigstens eine Kühleinrichtung (15, 21) zur Kühlung der verdichteten Verbrennungsluft (9) in dem Ansaugtrakt (5) angeordnet ist.

14. Vorrichtung, insbesondere zur Durchführung eines Verfahrens nach einem der vorhergehenden Ansprüche, mit einer Brennkraftmaschine (7), insbesondere mit einem Dieselmotor, und einer externe Abgasrückführungs-Einrichtung (39), wobei mittels der externen Abgasrückführungs-Einrichtung (39) das von der Brennkraftmaschine (7) emittierte Abgas (25) wieder der Brennkraftmaschine (7) zuführbar ist, wobei die Abgasrückführungs-Einrichtung (39) eine Rückführungs-Stelleinrichtung (43) aufweist, mittels der die Menge des rückgeführten Abgases (25) einstellbar ist, wobei eine Schließzeitpunkt-Stelleinrichtung (47) vorgesehen ist, mittels der der Schließzeitpunkt des wenigstens einen Einlassventils der Brennkraftmaschine (7) verstellbar ist, wobei mittels der Schließzeitpunkt-Stelleinrichtung (47) ein Grundzyklus der Brennkraftmaschine (7) einstellbar ist, in dem das wenigstens eine Einlassventil der Brennkraftmaschine (7) in einem Kurbelwinkelbereich von 1° bis 40° Kurbelwinkel, insbesondere von 10° bis 40° Kurbelwinkel, nach UT (unterer Totpunkt) schließt, wobei zur Reduzierung der von der Brennkraftmaschine (7) emittierten Stickoxide ein Stickoxid-Reduzierungszyklus mittels der Schließzeitpunkt-Stelleinrichtung (47) einstellbar ist, in dem das wenigstens eine Einlassventil der Brennkraftmaschine (7) im Vergleich zum Grundzyklus früher oder später schließt, **dadurch gekennzeichnet, dass** ein Steuergerät (57) vorgesehen ist, mittels dem die Schließzeitpunkt-Stelleinrichtung (47) und die Rückführungs-Stelleinrichtung (43) in Abhängigkeit von dem Drehmoment der Brennkraftmaschine (7) regelbar und/oder steuerbar ist, wobei, sofern das Drehmoment (M) der Brennkraftmaschine (7) wenigstens einen definierten Drehmoment-Grenzwert (M_{Grenz}) unterschreitet, die Brennkraftmaschine (7) in dem Grundzyklus betrieben und die Rückführung des Abgases mittels der Rückführungs-Stelleinrichtung (43) freigegeben wird, und wobei, sofern das Drehmoment (M) der Brennkraftmaschine (7) den definierten Drehmoment-Grenzwert (M_{Grenz}) überschreitet, die Brennkraftmaschine (7) in dem Stickoxid-Reduzierungszyklus betrieben und die Rückführung des Abgases mittels der Rückführungs-Stelleinrichtung (43) gesperrt wird.

15. Fahrzeug, insbesondere Nutzfahrzeug, mit einer Vorrichtung nach Anspruch 14.

## Claims

1. A method for operating an internal combustion engine, in particular a diesel engine, wherein an external exhaust-gas recirculation device (39) is provided, by way of which the exhaust gas (25) emitted by the internal combustion engine (7) can be fed to the internal combustion engine (7) again, wherein the exhaust-gas recirculation device (39) has a recirculation setting device (43) by way of which the flow rate of the recirculated exhaust gas (25) can be set, wherein a closing time setting device (47) is provided by way of which the closing time of the at least one inlet valve of the internal combustion engine (7) can be adjusted, wherein, by way of the closing time setting device (47), a basic cycle of the internal combustion engine (7) can be set in which the at least one inlet valve of the internal combustion engine (7) closes in a crank angle range from 1° to 40° crank angle, in particular from 10° to 40° crank angle, after BDC (bottom dead centre), wherein for the reduction of the nitrogen oxides emitted by the internal combustion engine (7), it is possible, by way of the closing time setting device (47), for a nitrogen oxide reduction cycle to be set in which the at least one inlet valve of the internal combustion engine (7) closes earlier or later than in the basic cycle, **characterized in that** a control unit (57) is provided by way of which the closing time setting device (47) and the recirculation setting device (43) are regulated and/or controlled as a function of the torque of the internal combustion engine (7), wherein, if the torque (M) of the internal combustion engine (7) falls below at least a defined torque threshold value (M_{Threshold}), the internal combustion engine (7) is operated in the basic cycle and the recirculation of the exhaust gas is enabled by way of the recirculation setting device (43), and wherein, if the torque (M) of the internal combustion engine (7) exceeds the defined torque threshold value (M_{Threshold}), the internal combustion engine (7) is operated in the nitrogen oxide reduction cycle and the recirculation of the exhaust gas is blocked by way of the recirculation setting device (43).

2. The method according to Claim 1, **characterized in that** the torque threshold value (M_{Threshold}) is set and/or adjusted by way of the control unit (57) as a function of the engine speed (n) of the internal combustion engine (7), wherein it is preferably provided that the set torque threshold value (M_{Threshold}) decreases with increasing engine speed of the internal combustion engine (7).

3. The method according to Claim 1 or 2, **characterized in that** the torque threshold value (M_{Threshold}) lies in a range from 10% to 60% of the maximum torque of the internal combustion engine (7).

4. The method according to Claim 2 or 3, **characterized in that**, in the control unit (57), there is stored a characteristic map (61) in which the torque threshold value (M_{Threshold}) is recorded as a function of the engine speed (n) of the internal combustion engine (7).

5. The method according to one of the preceding claims, **characterized in that** an exhaust tract (23) having an exhaust-gas aftertreatment system (33) is provided, wherein a temperature detection device (31) is provided by way of which the temperature (Tₘₑₐₛ) of the exhaust gas (25) flowing through the exhaust tract (23) can be detected upstream of the exhaust-gas aftertreatment system (33) as viewed in the exhaust-gas flow direction, and wherein the closing time setting device (47) and the recirculation setting device (43) are regulated and/or controlled additionally also as a function of the temperature (Tₘₑₐₛ) detected by way of the temperature detection device (31).

6. The method according to Claim 5, **characterized in that**, if the temperature (Tₘₑₐₛ) detected by way of the temperature detection device (31) exceeds at least a defined temperature threshold value (T_{Threshold}) and the torque (M) of the internal combustion engine (7) exceeds the defined torque threshold value (M_{Threshold}), the internal combustion engine (7) is operated in the basic cycle and the recirculation of the exhaust gas (25) is enabled by way of the recirculation setting device (43), and wherein, if the temperature (Tₘₑₐₛ) detected by way of the temperature detection device (31) falls below the at least one defined temperature threshold value (T_{hreshold}) and the torque (M) of the internal combustion engine (7) exceeds the defined torque threshold value (M_{Threshold}), the internal combustion engine (7) is operated in the nitrogen oxide reduction cycle and the recirculation of the exhaust gas (25) is blocked by way of the recirculation setting device (43).

7. The method according to Claim 6, **characterized in that** the temperature threshold value (T_{Threshold}) lies in a temperature range from 450°C to 500°C.

8. The method according to one of the preceding claims, **characterized in that**, for the exhaust-gas recirculation, at least some of the exhaust gas (25) flowing through an exhaust tract (23) is introduced into a recirculation line (41) of the external exhaust-gas recirculation device (39) upstream of a turbine (27, 29) of at least one exhaust-gas turbocharger (13, 19) of the internal combustion engine (7) as viewed in the exhaust-gas flow direction, and/or **in that** the exhaust gas (25) that is recirculated by way of the external exhaust-gas recirculation device (39) is introduced into an intake tract (5) of the internal combustion engine (7) downstream of a compressor (11, 17) of at least one exhaust-gas turbocharger (13, 19) of the internal combustion engine (7) as viewed in the combustion-air flow direction.

9. The method according to one of the preceding claims, **characterized in that** an exhaust tract (23) having an exhaust-gas aftertreatment system (33) is provided, wherein the exhaust-gas aftertreatment system (33) has at least one SCR catalytic converter element (35) by way of which nitrogen oxides contained in the exhaust gas of the internal combustion engine (7) can be reduced using ammonia as reducing agent, wherein a feed device (37) is provided by way of which the ammonia is introduced into the exhaust tract (23) upstream of the SCR catalytic converter element (35) as viewed in the exhaust-gas flow direction.

10. The method according to one of the preceding claims, **characterized in that** the nitrogen oxide reduction cycle is formed by a Miller cycle, wherein it is preferably provided that, in the nitrogen oxide cycle, the at least one inlet valve of the internal combustion engine (7) closes in a crank angle range from 40° to 5° crank angle before BDC.

11. The method according to one of the preceding claims, **characterized in that** the nitrogen oxide reduction cycle is formed by an Atkinson cycle, wherein it is preferably provided that, in the nitrogen oxide cycle, the at least one inlet valve of the internal combustion engine (7) closes in a crank angle range from 50° to 70° crank angle after BDC.

12. The method according to one of the preceding claims, **characterized in that** the closing time setting device (47) is formed by a cam adjustment means and/or by a camshaft adjustment means.

13. The method according to one of the preceding claims, **characterized in that** the internal combustion engine (7) has multiple, in particular two, exhaust-gas turbochargers (13, 19) for the compression of the combustion air (9) flowing through an intake tract (5) of the internal combustion engine (7), wherein it is preferably provided that in each case at least one cooling device (15, 21) for cooling the compressed combustion air (9) is arranged in the intake tract (5) between a compressor (11) of a first exhaust-gas turbocharger (13) and a compressor (17) of a second exhaust-gas turbocharger (19), and downstream of the compressor (17) of the second exhaust-gas turbocharger (19), as viewed in the combustion-air flow direction.

14. An apparatus, in particular for carrying out a method according to one of the preceding claims, having an internal combustion engine (7), in particular having a diesel engine, and having an external exhaust-gas recirculation device (39), wherein, by way of the external exhaust-gas recirculation device (39), the exhaust gas (25) emitted by the internal combustion engine (7) can be fed to the internal combustion engine (7) again, wherein the exhaust-gas recirculation device (39) has a recirculation setting device (43) by way of which the flow rate of the recirculated exhaust gas (25) can be set, wherein a closing time setting device (47) is provided by way of which the closing time of the at least one inlet valve of the internal combustion engine (7) can be adjusted, wherein, by way of the closing time setting device (47), a basic cycle of the internal combustion engine (7) can be set in which the at least one inlet valve of the internal combustion engine (7) closes in a crank angle range from 1° to 40° crank angle, in particular from 10° to 40° crank angle, after BDC (bottom dead centre), wherein, for the reduction of the nitrogen oxides emitted by the internal combustion engine (7), it is possible, by way of the closing time setting device (47), for a nitrogen oxide reduction cycle to be set in which the at least one inlet valve of the internal combustion engine (7) closes earlier or later than in the basic cycle, **characterized in that** a control unit (57) is provided by way of which the closing time setting device (47) and the recirculation setting device (43) are regulated and/or controlled as a function of the torque of the internal combustion engine (7), wherein, if the torque (M) of the internal combustion engine (7) falls below at least a defined torque threshold value (M_{Threshold}), the internal combustion engine (7) is operated in the basic cycle and the recirculation of the exhaust gas is enabled by way of the recirculation setting device (43), and wherein, if the torque (M) of the internal combustion engine (7) exceeds the defined torque threshold value (M_{Threshold}), the internal combustion engine (7) is operated in the nitrogen oxide reduction cycle and the recirculation of the exhaust gas is blocked by way of the recirculation setting device (43).

15. A vehicle, in particular utility vehicle, having an apparatus according to Claim 14.

## Revendications

1. Procédé de conduite d'un moteur à combustion interne et en particulier d'un moteur diesel,
dans lequel est prévu un dispositif externe (39) de recirculation des gaz d'échappement au moyen duquel les gaz d'échappement (25) émis par le moteur à combustion interne (7) peuvent être renvoyés dans le moteur à combustion interne (7), le dispositif (39) de recirculation des gaz d'échappement présentant un dispositif (43) de réglage de la recirculation au moyen duquel le débit de gaz d'échappement (25) recirculés peut être réglé,
dans lequel est prévu un dispositif (47) de réglage de l'instant de fermeture au moyen duquel l'instant de fermeture de la ou des soupapes d'admission du moteur à combustion interne (7) peut être réglé, le dispositif (47) de réglage de l'instant de fermeture permettant de régler un cycle de base du moteur à combustion interne (7) au cours duquel la ou les soupapes d'admission du moteur à combustion interne (7) se ferment dans une plage angulaire du vilebrequin de 1° à 40° d'angle de vilebrequin et en particulier de 10° à 40° d'angle de vilebrequin après le point mort bas UT,
un cycle de réduction des oxydes d'azote au cours duquel la ou les soupapes d'admission du moteur à combustion interne (7) se ferment plus tôt ou plus tard que dans le cycle de base pouvant être établi au moyen du dispositif (47) de réglage de l'instant de fermeture pour réduire les oxydes d'azote émis par le moteur à combustion interne (7), **caractérisé en ce que**
est prévu un appareil de commande (57) au moyen duquel le dispositif (47) de réglage de l'instant de fermeture et le dispositif (43) de réglage de la recirculation sont régulés et/ou commandés en fonction du couple de rotation du moteur à combustion interne (7),
**en ce que** dès que le couple de rotation (M) du moteur à combustion interne (7) n'atteint plus au moins une valeur limite définie (M_{Grenz}) du couple de rotation, le moteur à combustion interne (7) est conduit dans le cycle de base et la recirculation des gaz d'échappement est lancée au moyen du dispositif (43) de réglage de la recirculation et
**en ce que** dès que le couple de rotation (M) du moteur à combustion interne (7) dépasse la valeur limite définie (M_{Grenz}) du couple de rotation, le moteur à combustion interne (7) est conduit en cycle de réduction des oxydes d'azote et la recirculation des gaz d'échappement est bloquée au moyen du dispositif (43) de réglage de la recirculation.

2. Procédé selon la revendication 1, **caractérisé en ce que** la valeur limite (M_{Grenz}) du couple de rotation est établie et/ou modifiée au moyen de l'appareil de commande (57) en fonction de la vitesse de rotation (n) du moteur à combustion interne (7), le procédé prévoyant de préférence que la valeur limite (M_{Grenz}) du couple de rotation qui est réglée diminue lorsque la vitesse de rotation du moteur à combustion interne (7) augmente.

3. Procédé selon les revendications 1 ou 2, **caractérisé en ce que** la valeur limite (M_{Grenz}) du couple de rotation est située dans une plage de 10% à 60% du couple de rotation maximum du moteur à combustion interne (7).

4. Procédé selon les revendications 2 ou 3, **caractérisé en ce qu'**un champ de caractéristiques (61) dans lequel la valeur limite (M_{Grenz}) du couple de rotation est introduite en fonction de la vitesse de rotation (n) du moteur à combustion interne (7) est conservée en mémoire dans l'appareil de commande (57).

5. Procédé selon l'une des revendications précédentes, **caractérisé en ce qu'**il prévoit un train (23) de gaz d'échappement doté d'un système (33) de traitement des gaz d'échappement, dans lequel est prévu un dispositif (31) de saisie de la température au moyen duquel la température (Tₘₑₛₛ) des gaz d'échappement (25) qui s'écoulent dans le train (23) de gaz d'échappement peut être saisie en amont du système (33) de traitement des gaz d'échappement dans la direction d'écoulement des gaz d'échappement et dans lequel le dispositif (47) de réglage de l'instant de fermeture et le dispositif (43) de réglage de la recirculation sont de plus régulés et/ou commandés également en fonction de la température (Tₘₑₛₛ) saisie par le dispositif (31) de saisie de la température.

6. Procédé selon la revendication 5, **caractérisé en ce que** dès que la température (Tₘₑₛₛ) saisie au moyen du dispositif (31) de saisie de la température dépasse au moins une valeur limite (T_{Grenz}) de la température et que le couple de rotation (M) du moteur à combustion interne (7) dépasse la ou les valeurs limites définies (M_{Grenz}) de la température, le moteur à combustion interne (7) est conduit en cycle de base et la recirculation des gaz d'échappement (25) est lancée au moyen du dispositif (43) de réglage de la recirculation et **en ce que** dès que la température (Tₘₑₛₛ) saisie par le dispositif (31) de saisie de la température n'atteint plus la ou les valeurs limites définies (T_{Grenz}) de la température et que le couple de rotation (M) du moteur à combustion interne (7) dépasse la valeur limite définie (M_{Grenz}) du couple de rotation, le moteur à combustion interne (7) est conduit en cycle de réduction des oxydes d'azote et la recirculation des gaz d'échappement (25) est bloquée au moyen du dispositif (43) de réglage de la recirculation.

7. Procédé selon la revendication 6, **caractérisé en ce que** la valeur limite (T_{Grenz}) de la température est située dans la plage des températures de 450°C à 500°C.

8. Procédé selon l'une des revendications précédentes, **caractérisé en ce que** pour la recirculation des gaz d'échappement, au moins une partie des gaz d'échappement (25) s'écoulant dans le train (23) de gaz d'échappement est introduite dans un conduit (41) de recirculation du dispositif externe (39) de recirculation des gaz d'échappement en amont d'une turbine (27, 29) d'au moins un turbocompresseur (13, 19) entraîné par les gaz d'échappement du moteur à combustion interne (7) et/ou **en ce que** les gaz d'échappement (25) recirculés au moyen du dispositif externe (39) de recirculation des gaz d'échappement sont introduits dans un conduit d'aspiration (5) du moteur à combustion interne (7) en aval, dans la direction d'écoulement de l'air de combustion, d'un compresseur (11, 17) d'au moins un turbocompresseur (13, 19) entraîné par les gaz d'échappement du moteur à combustion interne (7).

9. Procédé selon l'une des revendications précédentes, **caractérisé en ce qu'**il prévoit un train (23) de gaz d'échappement doté d'un système (33) de traitement des gaz d'échappement, le système (33) de traitement des gaz d'échappement présentant au moins un élément (35) de catalyseur SCR au moyen duquel les oxydes d'azote que contiennent les gaz d'échappement du moteur à combustion interne (7) peuvent être réduits à l'aide d'ammoniac servant d'agent réducteur, un dispositif d'amenée (37) au moyen duquel l'ammoniac est introduit dans le train (23) de gaz d'échappement en amont, dans la direction d'écoulement des gaz d'échappement, de l'élément (35) de catalyseur SCR, étant prévu.

10. Procédé selon l'une des revendications précédentes, **caractérisé en ce que** le cycle de réduction des oxydes d'azote est formé d'un cycle Miller, le procédé prévoyant de préférence que dans le cycle des oxydes d'azote, la ou les soupapes d'admission du moteur à combustion interne (7) se ferment dans une plage d'angles de vilebrequin de 40° à 5° en avant du point UT.

11. Procédé selon l'une des revendications précédentes, **caractérisé en ce que** le cycle de réduction des oxydes d'azote est formé d'un cycle Atkinson, le procédé prévoyant de préférence que dans le cycle des oxydes d'azote, la ou les soupapes d'admission du moteur à combustion interne (7) se ferment dans une plage d'angles de vilebrequin de 50° à 70° après le point UT.

12. Procédé selon l'une des revendications précédentes, **caractérisé en ce que** le dispositif (47) de réglage de l'instant de fermeture est formé d'un ajustement de came et/ou d'un ajustement de l'arbre à cames.

13. Procédé selon l'une des revendications précédentes, **caractérisé en ce que** le moteur à combustion interne (7) présente plusieurs et en particulier deux turbocompresseurs (13, 19) entraînés par les gaz d'échappement pour comprimer l'air de combustion (9) qui s'écoule dans un conduit d'aspiration (5) du moteur à combustion interne (7), le procédé prévoyant de préférence de disposer dans le conduit d'aspiration (5), entre le compresseur (11) d'un premier turbocompresseur (13) entraîné par les gaz d'échappement et le compresseur (17) d'un deuxième turbocompresseur (19) entraîné par les gaz d'échappement et en aval du compresseur (17) du deuxième turbocompresseur (19) au moins un dispositif de refroidissement (15, 21) qui refroidit l'air de combustion (9) comprimé.

14. Ensemble prévu en particulier pour mettre en oeuvre un procédé selon l'une des revendications précédentes, l'ensemble présentant
un moteur à combustion interne (7), en particulier un moteur diesel,
et un dispositif externe (39) de recirculation des gaz d'échappement, les gaz d'échappement (25) émis par le moteur à combustion interne (7) pouvant être renvoyés dans le moteur à combustion interne (7) au moyen du dispositif externe (39) de recirculation des gaz d'échappement, le dispositif (39) de recirculation des gaz d'échappement présentant un dispositif (43) de réglage de la recirculation au moyen duquel le débit de gaz d'échappement (25) recirculés peut être réglé,
un dispositif (47) de réglage de l'instant de fermeture au moyen duquel l'instant de fermeture de la ou des soupapes d'admission du moteur à combustion interne (7) peut être réglé, le dispositif (47) de réglage de l'instant de fermeture permettant de régler un cycle de base du moteur à combustion interne (7) au cours duquel la ou les soupapes d'admission du moteur à combustion interne (7) se ferment dans une plage angulaire du vilebrequin de 1° à 40° d'angle de vilebrequin et en particulier de 10° à 40° d'angle de vilebrequin après le point mort bas UT,
un cycle de réduction des oxydes d'azote au cours duquel la ou les soupapes d'admission du moteur à combustion interne (7) se ferment plus tôt ou plus tard que dans le cycle de base pouvant être établi au moyen du dispositif (47) de réglage de l'instant de fermeture pour réduire les oxydes d'azote émis par le moteur à combustion interne (7), **caractérisé en ce que**
l'ensemble présente un appareil de commande (57) au moyen duquel le dispositif (47) de réglage de l'instant de fermeture et le dispositif (43) de réglage de la recirculation sont régulés et/ou commandés en fonction du couple de rotation du moteur à combustion interne (7),
**en ce que** dès que le couple de rotation (M) du moteur à combustion interne (7) n'atteint plus au moins une valeur limite définie (M_{Grenz}) du couple de rotation, le moteur à combustion interne (7) est conduit en cycle de base et la recirculation des gaz d'échappement est lancée au moyen du dispositif (43) de réglage de la recirculation et
**en ce que** dès que le couple de rotation (M) du moteur à combustion interne (7) dépasse la valeur limite définie (M_{Grenz}) du couple de rotation, le moteur à combustion interne (7) est conduit en cycle de réduction des oxydes d'azote et la recirculation des gaz d'échappement est bloquée au moyen du dispositif (43) de réglage de la recirculation.

15. Véhicule, en particulier véhicule utilitaire, doté d'un ensemble selon la revendication 14.
